**Europäisches Patentamt**

**European Patent Office**

**Office européen des brevets**

(19)

(11) Veröffentlichungsnummer: **0 025 521**
**B1**

(12)

# EUROPÄISCHE PATENTSCHRIFT

(45) Veröffentlichungstag der Patentschrift:
**08.12.82**

(51) Int. Cl.³: **A 01 G 27/00**

(21) Anmeldenummer: **80104934.7**

(22) Anmeldetag: **20.08.80**

(54) **Kulturtopf.**

(30) Priorität: **03.09.79 DE 2935568**

(43) Veröffentlichungstag der Anmeldung:
**25.03.81 Patentblatt 81/12**

(45) Bekanntmachung des Hinweises auf die Patenterteilung:
**08.12.82 Patentblatt 82/49**

(84) Benannte Vertragsstaaten:
**AT BE CH FR GB IT LI NL**

(56) Entgegenhaltungen:
**AT-B-348 814**
**FR-A-2 250 469**
**US-A-2 072 185**
**US-A-3 965 616**

(73) Patentinhaber: **LEIFHEIT INTERNATIONAL GmbH,
Leifheitstrasse, D-5408 Nassau/Lahn (DE)**

(72) Erfinder: **Joswig, Siegfried, Austrasse 5, D-5241 Kausen
(DE)**
Erfinder: **Liebscher, Johannes, Dr.-Haupt-Weg,
D-5408 Nassau (DE)**
Erfinder: **Tiwi, Peter, Hungerbachweg 2,
D-5421 Fachbach (DE)**
Erfinder: **Keiels, Peter, Schulstrasse 3, D-5409 Obernhof
(DE)**

## Kulturtopf

Die Erfindung betrifft einen Kulturtopf gemäß dem Oberbegriff des Anspruchs 1.

Die FR-A-2 250 469 beschreibt einen Kulturtopf mit schmalen, senkrecht aufeinanderstehenden Öffnungen im Boden, zur Verbindung mit einer Einheit zur Versorgung der Pflanze mit Wasser, wobei diese Öffnungen durch jeweils zwei gegeneinanderstehende, federnde Zungen markiert sind, die im Ruhezustand plan im Topfboden liegen.

Sie verschließen dabei zwar weitgehend den Topfboden; die verbleibenden schmalen Öffnungen reichen aber aus, daß die feinen Pflanzwurzeln durchwachsen und dadurch ein Einführen der Einheit zumindest sehr erschweren. Weiter besteht beim Einführen insbesondere bei dünnen Materialstärken die Gefahr des Einreißens.

Aufgabe der vorliegenden Erfindung ist es, einen derartigen Spezialkulturtopf so weiterzubilden, daß eine einfache, sichere Adaption mit der Einheit gewährleistet ist und dieser Kulturtopf kostengünstig mittels der verschiedenen Kunststoff-Fertigungsverfahren herzustellen ist.

Dies wird erfindungsgemäß mit den kennzeichnenden Merkmalen des Anspruchs 1 erreicht. Dadurch wird eine einfache Fertigung sowohl im Spritzguß- als auch im Tiefziehverfahren erreicht. Trotzdem kann der Saugdocht leicht und sicher eingeführt werden; durch die Reißstop-Bohrungen ist dabei eine Beschädigung des Kulturtopfbodens ausgeschlossen. Als weiterer Vorteil können diese Reißstop-Bohrungen gleichzeitig als Lüftungsöffnungen dienen.

Besonders bei der Fertigung von Kulturtöpfen nach dem Tiefziehverfahren bereitet das Herstellen von Öffnungen in einem Arbeitsgang mit dem Tiefziehgang Schwierigkeiten. Es ist deshalb besonders vorteilhaft, die Öffnungen durch Dünnstellen im Material zu markieren. Die Öffnungen werden dann erst bei Bedarf durchgestoßen bzw. aufgerissen. Dies hat den weiteren Vorteil, daß bei der Anzucht keine Pflanzwurzeln nach außen dringen und so das Einschieben des Saugdochtes erschweren.

Weitere vorteilhafte Ausgestaltungen der Öffnungen sind den Unteransprüchen zu entnehmen.

Um eine noch sichere Kopplung der Einheit mit dem Kulturtopf zu erreichen, sind neben der durch die federnde Führungszunge markierten Öffnung zusätzliche Halteeinrichtungen am Kulturtopf vorgesehen. So hat sich besonders ein umlaufender Absatz, der auch durch kreisförmig angeordnete Erhöhungen am Topfboden gebildet sein kann, bewährt. Ein besonders sicherer Halt wird dadurch gewährleistet, daß dieser Absatz, bzw. die Erhöhungen mit einem leichten Hinterschnitt ausgeführt sind, in den Teile der Einheit einrasten.

Einige Ausführungsbeispiele der Erfindung werden im folgenden anhand der Zeichnungen näher erläutert. Es zeigen

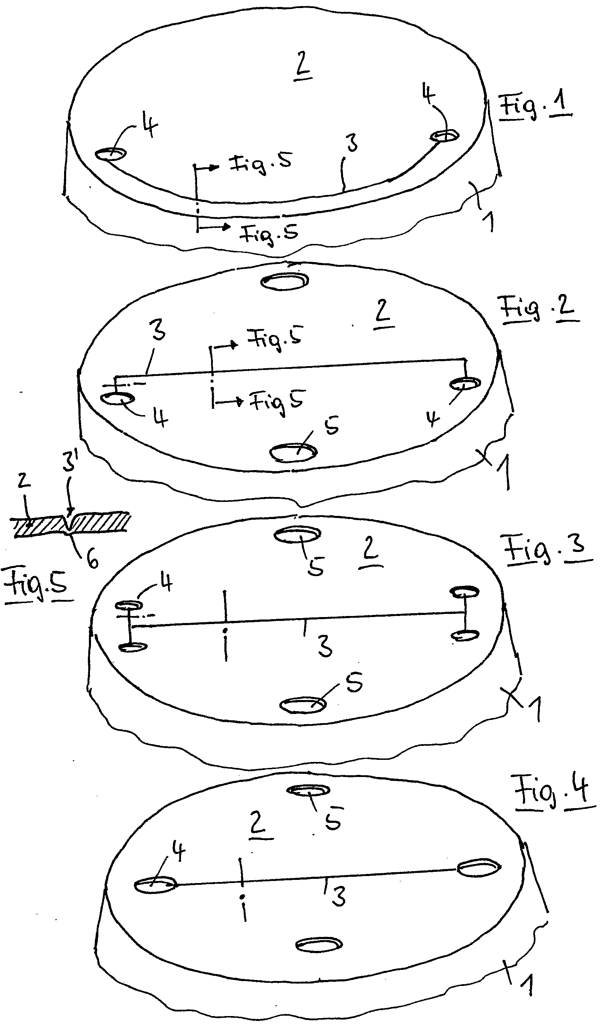

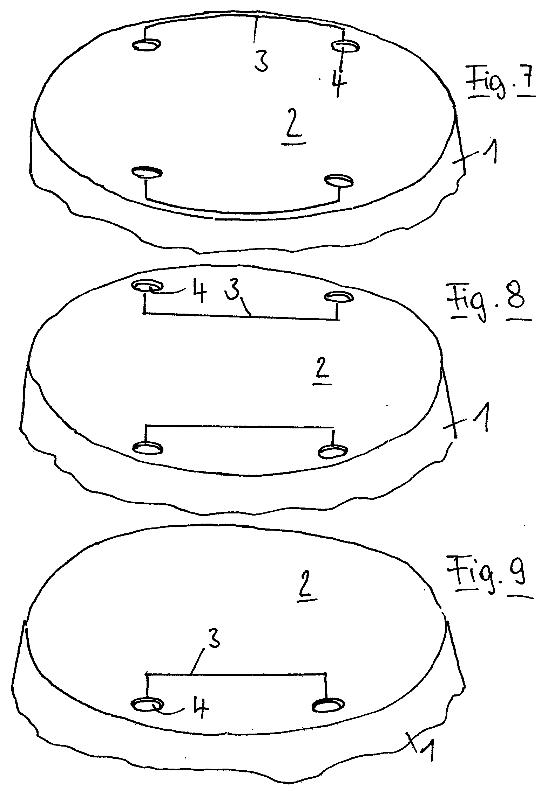

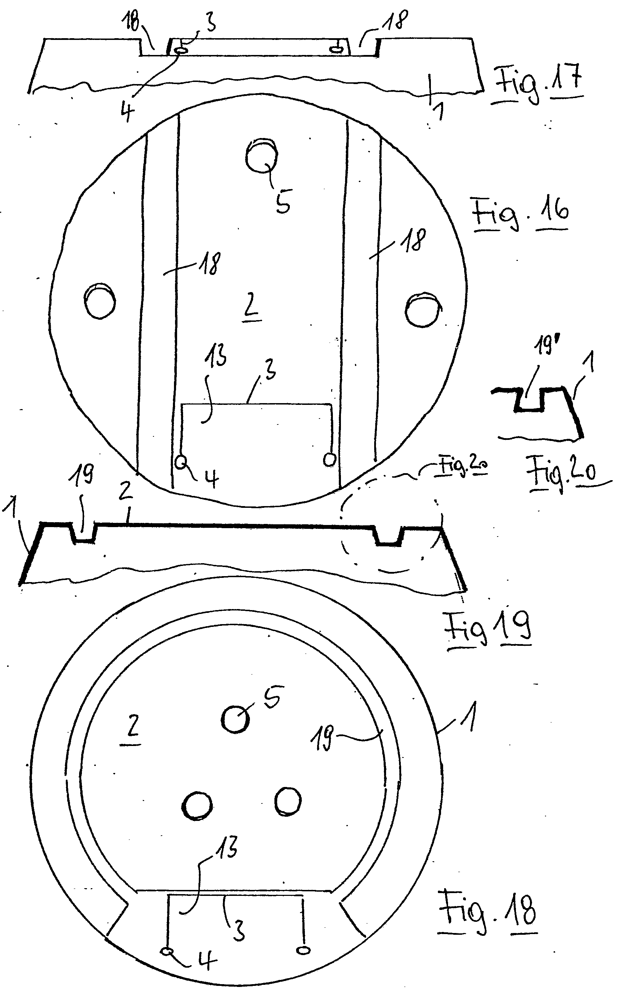

Fig. 1 bis 4 und 6 bis 9 verschiedene Anordnungen von einer oder mehreren Öffnungen im Boden des Kulturtopfes,

Fig. 5 den Schnitt durch eine Öffnung ausgebildet als Dünnstelle im Material,

Fig. 10 die Ausbildung einer Einheit zur Kopplung mit einem Kulturtopf gemäß Fig. 6,

Fig. 11 einen Schnitt durch die Einheit gemäß Fig. 10,

Fig. 12 eine Alternativlösung eines Kulturtopfes mit zusätzlicher Einführschräge,

Fig. 13 einen Schnitt gemäß Fig. 12,

Fig. 14 einen Kulturtopf mit kreisförmig angeordneten Erhöhungen zur zusätzlichen Halterung,

Fig. 15 einen Schnitt durch den Kulturtopfboden gemäß Fig. 14,

Fig. 16 eine Ansicht auf einen Kulturtopfboden mit Halterillen,

Fig. 17 einen Schnitt gemäß Fig. 16,

Fig. 18 eine weitere Alternativlösung einer ringförmigen Halterille,

Fig. 19 einen Schnitt gemäß Fig. 18 und

Fig. 20 eine mögliche Alternativausführung einer Halterille mit Hinterschnitt.

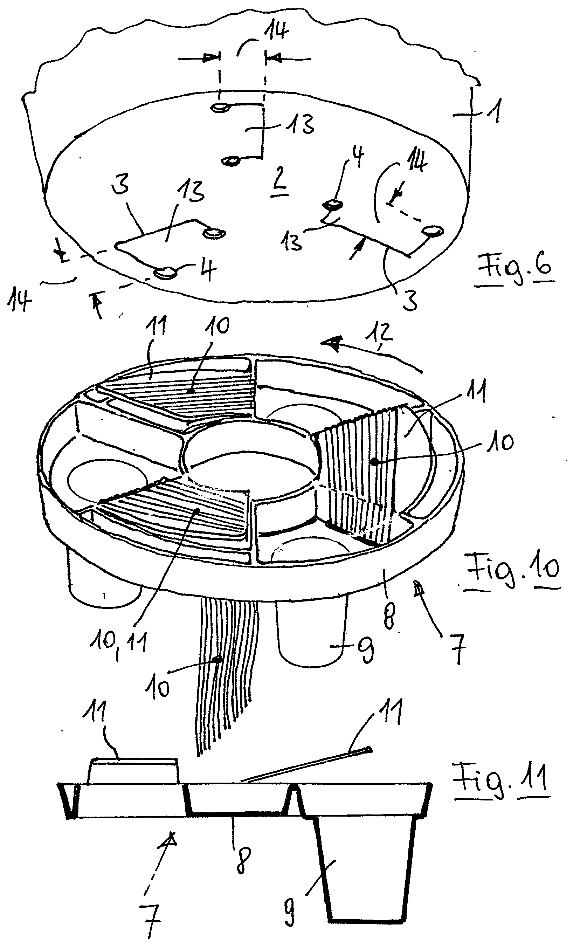

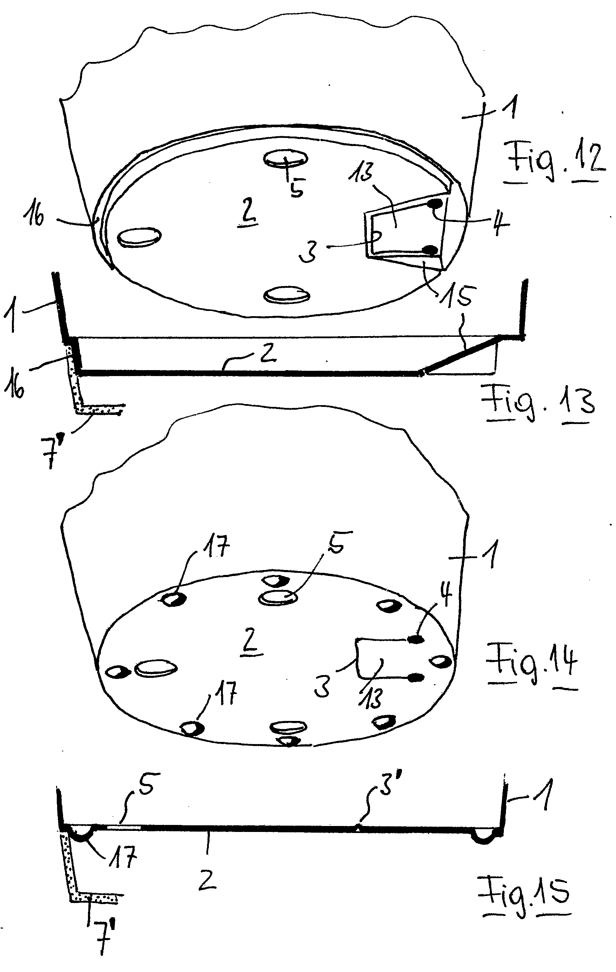

Der Kulturtopf ist bei allen Ausführungen im wesentlichen gleich; er unterscheidet sich lediglich im Bodenbereich und trägt deshalb immer das Bezugszeichen 1. Der Kulturtopfboden ist mit 2 bezeichnet. Die Öffnungen 3, in Form von Einschnitten, ihre Formen sind aus den Figuren ohne weiteres ersichtlich und bedürfen keiner näheren Erklärungen, sind an ihrem Ende von Reißstop-Bohrungen 4 begrenzt. Je nach Größe können diese Reißstop-Bohrungen auch als Lüftungsbohrungen benutzt werden. Bei einigen Ausführungsbeispielen, zum Beispiel Fig. 2, sind zusätzliche Lüftungsbohrungen 5 vorgesehen.

Fig. 5 zeigt einen Schnitt einer möglichen Ausführungsform einer Öffnung 3', ebenfalls in Form eines Einschnittes. Dabei wird die Öffnung lediglich durch eine Dünnstelle 6 im Topfboden markiert.

Die Fig. 10 und 11 zeigen eine Einheit 7 zur Anordnung an einen Kulturtopf gemäß der Fig. 6. An einem Grundkörper 8 mit Abstandsfüßen 9 sind Saugdochte 10 tragende Zungen 11 vorgesehen. Diese Einheit 7 wird in Pfeilrichtung 12 in den Kulturtopf 1 gemäß Fig. 6 eingeschraubt. Dabei werden die durch die Öffnung 3 markierten, federnden Führungszungen 13 in dem Bereich 14 in das Topfinnere ausgelengt.

Sinngemäß ist der Vorgang bei allen anderen gezeigten Ausführungsformen des Kulturtopfes.

Fig. 12 und 13 im Schnitt zeigen einen Kulturtopf, bei dem die Öffnung 3 mit den Reißstop-Bohrungen 4 in einer zusätzlichen Einführschräge 15 angeordnet ist. Die Öffnung ist auch bei dieser Ausführungsform wiederum voll durchgestanzt oder gemäß Fig. 5 auszubilden. Zusätzlich ist dieser Kulturtopf mit einer Vorkehrung zur Halterung einer Einheit 7' in Form eines Absatzes 16 versehen. Dieser Absatz 16 kann zur noch besseren Halterung der Einheit 7' mit einem leichten Hinterschnitt versehen werden.

In dem Ausführungsbeispiel gemäß den Fig. 14 und 15 ist der Absatz gemäß Fig. 12 durch kreisförmig angeordnete Erhöhungen 17 im Topfboden 2 ersetzt.

Die Fig. 16 und 17 zeigen einen Kulturtopf mit gerade Halterillen 18 und die Fig. 18 und 19 eine kreisförmige Halterille 19. Der Ausschnitt gemäß Fig. 20 zeigt eine Halterille 19' mit Hinterschnitt.

## Patentansprüche

1. Kulturtopf mit einer durch eine federnde Zunge (13) gebildeten schmalen Öffnung (3) im Bodenbereich zur Verbindung mit einer Einheit zur Versorgung der Pflanze mit Wasser, dadurch gekennzeichnet, daß die Öffnung (3) in Form eines Einschnittes ausgeführt und an ihren Enden von Reißstop-Bohrungen (4) begrenzt ist.

2. Kulturtopf nach Anspruch 1, dadurch gekennzeichnet, daß die Reißstop-Bohrungen (4) als Lüftungsbohrungen ausgeführt sind.

3. Kulturtopf nach Anspruch 1 oder 2, dadurch gekennzeichnet, daß die Öffnung (3') durch Dünnstellen (6) im Material markiert und erst bei Bedarf durchzustoßen bzw. aufzureißen ist.

4. Kulturtopf nach einem der Ansprüche 1 bis 3, dadurch gekennzeichnet, daß die Öffnung (3) im Bereich einer Einführschräge (15) für eine Einheit (7, 7') vorgesehen ist.

5. Kulturtopf nach einem der Ansprüche 1 bis 4, dadurch gekennzeichnet, daß zwei symmetrisch angeordnete, wahlweise zu benutzende Öffnungen (3) vorgesehen sind (Fig. 7 und 8).

6. Kulturtopf nach einem der Ansprüche 1 bis 4, dadurch gekennzeichnet, daß zumindest zwei sternförmig angeordnete Öffnungen (3) vorgesehen sind (Fig. 6).

7. Kulturtopf nach einem der Ansprüche 1 bis 6, dadurch gekennzeichnet, daß neben der Führungszunge (13) zumindest eine weitere Vorkehrung (16, 17, 18, 19, 19') zur Halterung einer Einheit (7, 7') zur Versorgung der Pflanze mit Wasser aus einem Reservoir vorgesehen ist.

8. Kulturtopf nach Anspruch 7, dadurch gekennzeichnet, daß die Vorkehrung als umlaufender Absatz (16) ausgebildet ist.

9. Kulturtopf nach Anspruch 8, dadurch gekennzeichnet, daß der Absatz durch kreisförmig angeordnete Erhöhungen (17) im Topfboden gebildet ist.

10. Kulturtopf nach Anspruch 7, dadurch gekennzeichnet, daß die Vorkehrung durch zumindest eine Rille (18, 19) im Topfboden gebildet ist.

11. Kulturtopf nach Anspruch 8 oder 10, dadurch gekennzeichnet, daß der Absatz (16) bzw. die Rille (19') mit Hinterschnitt ausgeführt ist.

## Claims

1. Plant pot with a narrow aperture (3) formed by a resilient tongue (13) in the base region for connection to a unit to supply the plant with water, characterised in that the aperture (3) is executed in the form of an incision and is limited by tear-arresting bores (4) at its ends.

2. Plant pot according to Claim 1, characterised in that the tear-arresting bores (4) are executed as ventilation bores.

3. Plant pot according to claim 1 or 2, characterised in that the aperture (3') is marked by thin places (6) in the material and is to be pierced through or torn open only when required.

4. Plant pot according to any of claims 1 to 3, characterised in that the aperture (3) is provided in the region of an introductory ramp (15) for a unit (7, 7').

5. Plant pot according to any of claims 1 to 4, characterised in that two symmetrically arranged apertures (3) are provided to be used selectively (Fig. 7 and 8).

6. Plant pot according to any of claims 1 to 4, characterised in that at least two apertures (3) are provided in stellate arrangement (Fig. 6).

7. Plant pot according to any of claims 1 to 6, characterised in that besides the guide tongue (13) at least one further provision (16, 17, 18, 19, 19') for supporting a unit (7, 7') to supply the plant with water from a reservoir is made.

8. Plant pot according to claim 7, characterised in that the provision is executed as an encircling shoulder (16).

9. Plant pot according to claim 8, characterised in that the shoulder is formed by circularly arranged elevations (17) in the pot base.

10. Plant pot according to claim 7, characterised in that the provision is formed by at least one groove (18, 19) in the pot base.

11. Plant pot according to claim 8 or 10, characterised in that the shoulder (16) or the groove (19') is executed with an undercut.

## Revendications

1. Pot de culture (1) comprenant, dans la zone du fond, une ouverture étroite (3), formée par une languette élastique (13), en vue d'une liaison avec une unité servant à alimenter la plante en eau, caractérisé en ce que l'ouverture (3) est conçue sous la forme d'une encoche et est limitées, à ses extrémités, par des trous d'arrêt de déchirure (4).

2. Pot de culture selon la revendication 1, caractérisé en ce que les trous d'arrêt de déchirure (4) sont réalisés comme des ouvertures d'aération.

3. Pot de culture selon l'une quelconque des revendications 1 et 2, caractérisé en ce que l'ouverture (3') est définie par un amincissement (6) de l'épaisseur de la matière et ne doit être percée ou coupée qu'en cas de besoin.

4. Pot de culture selon l'une quelconque des revendications 1 à 3, caractérisé en ce que l'ouverture (3) est prévue dans la zone d'un plan d'introduction oblique (15) pour une unité (7, 7').

5. Pot de culture selon l'une quelconque des revendications 1 à 4, caractérisé en ce qu'on a prévu deux ouvertures à utiliser à volonté (3), disposées symétriquement (fig. 7 et 8).

6. Pot de culture selon l'une quelconque des revendications 1 à 4, caractérisé en ce qu'on a prévu au moins deux ouvertures (3) disposées étoile (fig. 6).

7. Pot de culture selon l'une quelconque des revendications 1 à 6, caractérisé en ce qu'au moins une autre mesure (16, 17, 18, 19, 19') pour le maintien d'une unité (7, 7') servant à alimenter la plante en eau à partir d'un réservoir, est prévue en plus de la languette de guidage (13).

8. Pot de culture selon la revendication 7, caractérisé en ce que la mesure est réalisée comme un gradin circulaire (16).

9. Pot de culture selon la revendication 9, caractérisé en ce que le gradin est formé par des exhaussements (17) disposés en cercle dans le fond du pot.

10. Pot de culture selon la revendication 7, caractérisé en ce que la mesure se concrétise par au moins une rainure (18, 19) dans le found du pot.

11. Pot de culture selon l'une quelconque des revendications 8 et 10, caractérisé en ce que le gradin (16) ou la rainure (19') présente une contredépouille.

Fig.1

Fig.2

Fig.3

Fig.4

Fig.5

Fig. 7

Fig. 8

Fig. 9

Fig. 6

Fig. 10

Fig. 11

Fig. 12

Fig. 13

Fig. 14

Fig. 15

Fig. 17

Fig. 16

Fig. 20

Fig. 19

Fig. 18